# EUROPÄISCHE PATENTSCHRIFT

(11) **EP 0 913 750 B1**
(45) Veröffentlichungstag und Bekanntmachung des Hinweises auf die Patenterteilung: **12.02.2003**
(21) Anmeldenummer: 97119053.3
(22) Anmeldetag: 31.10.1997
(51) Int. Cl.: G05B 19/418

(54) **Anordnung zum Fernsteuern und/oder Fernbedienen eines Feldgeräts mittels eines Steuergeräts über einen Feldbus**
Apparatus for remote control and/or remote operation of a field device by means of a control device via a field-bus
Appareil pour la télécommande et/ou commande à distance d'un dispositif de terrain avec un appareil de commande par un bus de terrain

(43) Veröffentlichungstag der Anmeldung: 06.05.1999
(73) Patentinhaber: Endress + Hauser GmbH + Co.KG., 79689 Maulburg (DE)
(72) Erfinder: de Groot, Vincent, 79664 Wehr (DE)
(74) Vertreter: Schwepfinger, Karl-Heinz, Dipl.-Ing.

(56) Entgegenhaltungen:
- EP-A- 0 489 227
- DE-A- 19 615 190
- PINKOWSKI G: "WIE MAN INTELLIGENTE FELDGER{TE HERTELLERUNABH{ANGIG UND EINHEITLICH BEDIENEN KANN" ELEKTROTECHNIK, Bd. 77, Nr. 11, 20.November 1995, WÜRZBURG,DE, Seiten 26-28, 30/31, XP000550462
- PINKOWSKI G: "INSTRUMENTIERUNGSTECHNIK IM WANDEL" AUTOMATISIERUNGSTECHNISCHE PRAXIS - ATP, Bd. 34, Nr. 6, 1.Juni 1992, MÜNCHEN,DE, Seiten 325-327, XP000278496

## Beschreibung

Die Erfindung bezieht sich auf eine Anordnung zum Fernsteuern und/oder Fernbedienen eines Feldgeräts mittels eines Steuergeräts über einen Feldbus.

In industriellen Produktionsanlagen sind in der Regel an zahlreichen Stellen Feldgeräte im Einsatz, die über einen Feldbus von einer Zentrale aus ferngesteuert oder fernbedient werden können. Mit "Feldgeräte" werden allgemein Sensoren und Aktoren bezeichnet, die in Anlagen eingesetzt werden, in denen industrielle Prozesse ablaufen. Solche Feldgeräte können Druckmesser sein, mit deren Hilfe der Druck in einem Behälter gemessen und überwacht werden soll. Es kann aber auch ein Temperaturmesser sein, mit dessen Hilfe die Temperatur an einer gewünschten Stelle des Prozeßablaufs überwacht werden kann. Auch ein Füllstandsmesser kann als Feldgerät eingesetzt werden, der den Füllstand in einem Behälter überwacht. Zunehmend werden als Feldgeräte intelligente Geräte eingesetzt, die wesentlich mehr Einsatzmöglichkeiten bieten als reine Geräte zur Meßwerterfassung. Diese Feldgeräte können die erfaßten Meßwerte nicht nur verarbeiten, sondern es ist auch möglich, mit Hilfe eines z.B. an einer Zentrale befindlichen Steuergeräts auf PC-Basis oder auch mittels eines tragbaren Steuergeräts über den Feldbus On-Line oder sogar Off-Line auf die Feldgeräteparameter einzuwirken. Beispielsweise können je nach Bedarf unterschiedliche Meß-Sollwerte oder auch Meß-Grenzwerte sowie Meßbereiche über den Feldbus zu den Feldgeräten übertragen werden. Zur Erzielung dieser Funktionalität ist für das im Feldgerät gespeicherte Anwendungsprogramm eine Beschreibung der Feldgeräteparameter erforderlich. Diese Beschreibung kann dabei als eine achte Schicht des OSI-Schichtenmodells angesehen werden, das als Standardbeschreibung einer Netzwerkarchitektur geschaffen wurde. Dafür wurden verschiedene sogenannte Gerätebeschreibungssprachen ("Device Description Languages", abgekürzt DDLs) festgelegt, die für diesen Zweck eingesetzt werden können. Diese Gerätebeschreibungssprachen beschreiben nicht nur die Attribute der Feldgeräteparameter, sondern auch die Abhängigkeiten oder Beziehungen zwischen den Parametern und Attributen.

Der bisher eingeschlagene Weg zur Fernsteuerung und Fernbedienung der Feldgeräte mit Gerätebeschreibungssprachen zu arbeiten, hat jedoch zahlreiche Nachteile. Es gibt keine Garantie, daß die für ein Feldgerät unter Verwendung einer der Sprachen erstellte Gerätebeschreibung ("Device Description", abgekürzt DD) die Funktionalität des Geräts richtig beschreibt. Für komplexe Feldgeräte ist es äußerst schwierig, eine Gerätebeschreibung zu erstellen, die mit der Funktionalität der Parameter des Feldgeräts konsistent ist. Es steht bisher kein Werkzeug zur Verfügung, mit dessen Hilfe der Gerätecode in eine Gerätebeschreibung umgesetzt werden kann oder der Gerätecode aus einer Gerätebeschreibung erzeugt werden kann. Es gibt die verschiedensten Gerätebeschreibungssprachen, die spezifisch für bestimmte Steuergeräte sind, was bedeutet, daß für jede Kombination von Feldgerät und Steuergerät eine ganz spezielle Gerätebeschreibung geschrieben werden muß. Wenn ein neues Gerät eingesetzt werden soll oder die Software eines existierenden Geräts aktualisiert werden soll, hat dies in der Regel zur Folge, daß die Gerätebeschreibung aktualisiert werden muß, die dann dem Steuergerät zugeführt werden muß. Dies geschieht gewöhnlich dadurch, daß die aktualisierte Gerätebeschreibung unter Zuhilfenahme einer Diskette in das Steuergerät eingegeben wird. Dies führt leicht zu Versionsproblemen.

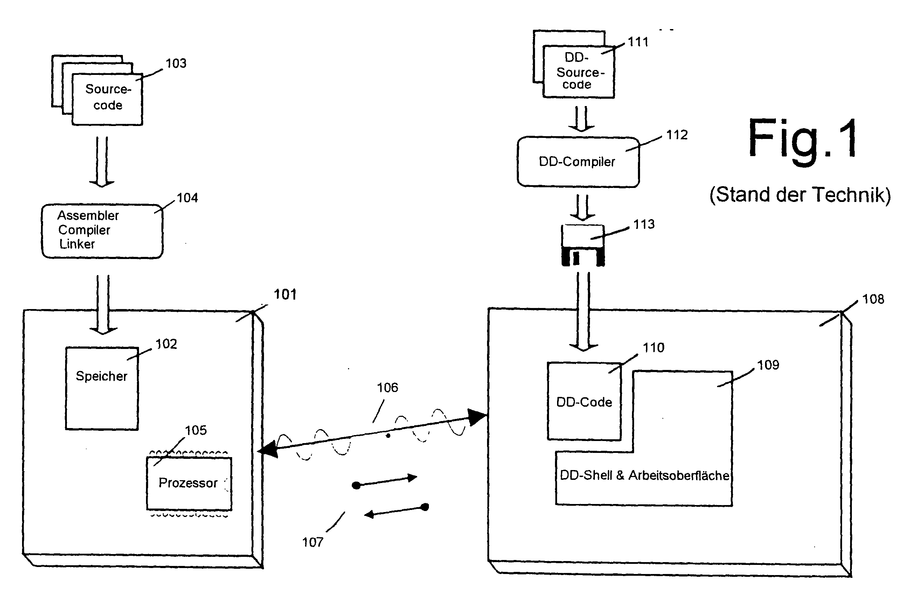

Ein vereinfachtes Beispiel einer Anordnung der obigen Art ist in Figur 1 dargestellt. Das Feldgerät 101 ist mit einem Speicher 102 versehen, in dem ein prozessorspezifischer binärer Code abgespeichert ist. Dieser binäre Code wird gewöhnlich mit Hilfe eines Assembler/C-Sourcecodes aus einer oder mehreren Dateien 103 und durch Verarbeiten in einem Assembler, einem Compiler und einem Linker erzeugt, wobei diese Programme schematisch in einem Block 104 angegeben sind. Im Feldgerät 101 wird der binäre Code dann in einem passenden Prozessor 105 verarbeitet. Das mit dem Feldgerät 101 über den Feldbus 106 verbundene Steuergerät 108 besteht aus einem Universalteil, der als DD-Shell und Arbeitsoberfläche 109 bezeichnet wird. Ferner enthält das Steuergerät einen flexiblen, feldgerätespezifischen Teil 110, in den der DD-Code eingegeben werden kann. Dieser DD-Code repräsentiert die für das jeweilige Feldgerät spezifische Funktionalität. Der DD-Code ist z.B. eine dynamische Link-Bibliothek ("Dynamic Link Library", abgekürzt DLL), und sie wird über eine Diskette 113 in den flexiblen Teil 110 eingegeben. Der DD-Code wird von einem DD-Compiler 112 erzeugt, der unter Anwendung einer oder mehrerer DD-Sourcedateien 111 arbeitet. Die durch die Pfeile 107 dargestellte Übertragung der Geräteparameter zwischen dem Feldgerät 101 und dem Steuergerät 108 erfolgt über den Feldbus 106.

In "Pinkowski G.: "Wie man intelligente Feldgerätehersteller unabhängig und einheitlich bedienen kann", Elektrotechnik, Bd. 77, Nr. 11, 20. November 1995, Würzburg, DE, Seiten 26 bis 28, 30/31, XP 00055462" ist eine Anordnung der obigen Art beschrieben, die mit Feldgeräten arbeitet, in denen eine Gerätebeschreibung abgespeichert ist, die bei Bedarf zu einem Steuergerät transferiert werden kann. Diese Anordnung weist ebenfalls den Nachteil auf, daß die Aktualisierung von Gerätebeschreibungen zu Softwareversionskonflikten führen kann.

Der Erfindung liegt die Aufgabe zugrunde, eine Anordnung der obigen Art zu schaffen, die die oben geschilderten Nachteile nicht aufweist.

Mit den im Patentanspruch 1 angegebenen Merkmalen wird diese Aufgabe gelöst.

Durch Programmieren der Feldgeräteanwendung in einer Programmiersprache, deren Compiler einen plattformunabhängigen Programmcode generiert und durch Verwendung eines Mikroprozessors, der diesen Code verarbeitet, ergibt sich ein Feldgerät, das einen plattformunabhängigen Code abarbeitet. Durch Einfügen der Parameterattribute und der Abhängigkeiten oder Beziehungen in eine Software-Architektur, die für die Trennung der Systemfunktionalität und der hardwarenahen Funktionalität des Feldgeräts verantwortlich ist, und durch Hinzufügen einer Möglichkeit zum Übertragen des die Parameter repräsentierenden Programmcodes in das Steuergerät kann dieser plattformunabhängige Programmcode auch im Steuergerät verarbeitet werden. Durch Anwendung eines solchen Verfahrens ist es nicht mehr notwendig, Feldgerätebeschreibungsdateien für das Feldgerät zu schreiben, und das Feldgerät hat Zugriff auf eine konsistente Gerätefunktionalität, die einen fehlerfreien Betrieb ermöglicht.

Ein Ausführungsbeispiel der Erfindung wird unter Bezugnahme auf die Zeichnung näher erläutert. In der Zeichnung zeigen:
Figur 1 eine vereinfachte Darstellung der oben erläuterten Anordnung nach dem Stand der Technik und
Figur 2 eine schematische Darstellung einer Anordnung gemäß der Erfindung.

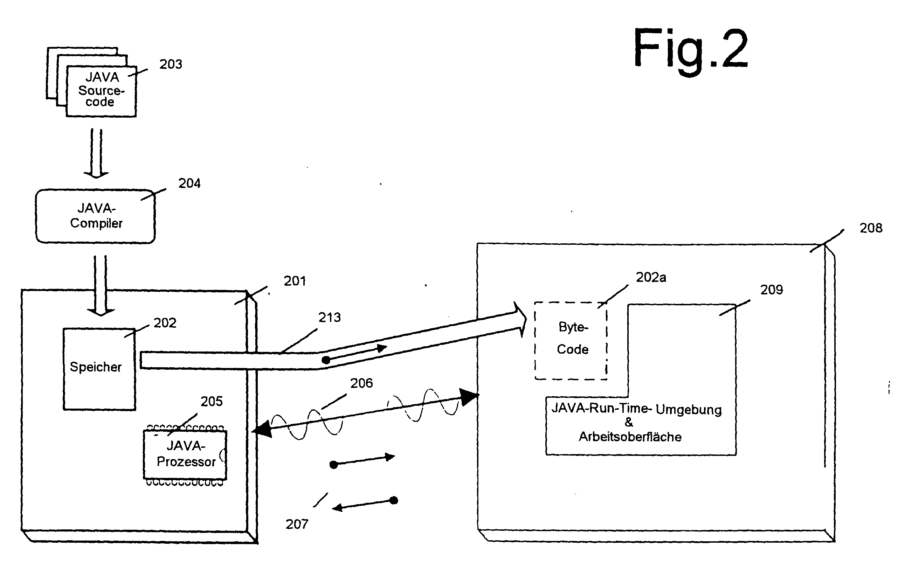

Die in Figur 2 dargestellte Anordnung zeichnet sich dadurch aus, daß die Feldgerätebeschreibung unter Verwendung der Programmiersprache JAVA erstellt wird. (JAVA ist eine Marke der Firma Sun Microsystems). Es kann aber auch eine andere Programmiersprache verwendet werden, sofern sie die Erzeugung eines plattformunabhängigen Programmcodes ermöglicht. Dies bildet die Grundlage dafür, die Anordnung so auszugestalten, daß die eingangs erwähnten Nachteile der herkömmlichen Technik nicht mehr auftreten.

Das Feldgerät 201 enthält einen Speicher 202, in dem ein JAVA-Bytecode gespeichert ist, der mittels eines JAVA-Quellcodes aus einer oder mehreren Dateien 203 mit Hilfe eines JAVA-Compilers 204 erzeugt wird. Ein spezieller JAVA-Prozessor 205 führt im Feldgerät den JAVA-Bytecode aus. Über einen Feldbus 206 können zwischen einem Steuergerät 208 und dem Feldgerät 201 Geräteparameter 207 transportiert werden. Der JAVA-Bytecode kann über den Feldbus 206 zum Steuergerät 208 übertragen werden, wie dies durch die Verbindung 213 schematisch angedeutet ist. Dieser JAVA-Bytecode wird im Steuergerät in einem Speicher 202a gespeichert, wobei dieser Code plattformunabhängig ist, so daß die für die Parameterbeschreibung verantwortlichen Objekte im Steuergerät 208 von einer JAVA-Run-Time-Umgebung und einer entsprechenden Arbeitsoberfläche benutzt werden kann. Diese Umgebung ist in Figur 2 schematisch bei 209 angegeben. Aufgrund des Vorhandenseins der JAVA-Run-Time-Umgebung im Steuergerät 108 kann der JAVA-Bytecode, der als Ersatz für die bisher verwendete Gerätebeschreibung dient, im Steuergerät verarbeitet werden, unabhängig davon, auf welche Plattform diese Umgebung aufgesetzt ist.

## Patentansprüche

1. Anordnung zum Fernsteuern und/oder Fernbedienen eines Feldgeräts (201) mittels eines Steuergeräts (208) über einen Feldbus (206), **dadurch gekennzeichnet, daß** in dem Feldgerät (201) ein die Funktionalität dieses Feldgeräts beschreibender, plattformunabhängiger Programmcode gespeichert ist, daß das Feldgerät (201) einen den plattformunabhängigen Programmcode verarbeitenden Prozessor (205) enthält, in dem der plattformunabhängige Programmcode ausführbar ist, und daß das Steuergerät (208) mit einer Run-Time-Umgebung (209) ausgestattet ist, in der der plattformunabhängige Programmcode nach Übertragung vom Feldgerät (201) zum Steuergerät (208) über den Feldbus (206) lauffähig ist, so daß die Fernsteuerung und/oder Fernbedienung des Feldgeräts (201) durch Übertragung von Feldgeräte-Parametern über den Feldbus (206) unter der Run-Time-Umgebung (209) durchführbar ist.

2. Anordnung nach Anspruch 1, **dadurch gekennzeichnet, daß** die Feldgeräte-Parameter Grenzmeßwerte, Sollwerte und Meßbereichswerte sind.

3. Anordnung nach Anspruch 1 oder 2, **dadurch gekennzeichnet, daß** der plattformunabhängige Programmcode ein JAVA-Bytecode ist, daß der Prozessor ein JAVA-Prozessor ist und daß die Run-Time-Umgebung eine JAVA-Run-Time-Umgebung ist.

## Claims

1. An arrangement for remote control and/or remote operation of a field device (201) by means of a controller (208) via a field bus (206), **characterized in that** in the field device (201) a platform-independent program code describing the functionality of this field device is stored, **in that** the field device (201) contains a processor (205) which processes the platform-independent program code and in which the platform-independent program code is executable, and **in that** the controller (208) is equipped with a run-time environment (209) in which the platform-independent program code can be run following transfer from the field device (201) to the controller (208) via the field bus (206) so that remote control and/or remote operation of the field device (201) is implementable by transferring field device parameters via the field bus (206) in the run-time environment (209).

2. The arrangement as set forth in claim 1, **characterized in that** the field device parameters are limiting values of measured data, set points and measuring range values.

3. The arrangement as set forth in claim 1 or 2, **characterized in that** the platform-independent program code is a JAVA byte code, **in that** the processor is a JAVA processor, and **in that** the run-time environment is a JAVA run-time environment.

## Revendications

1. Agencement pour commander et/ou manoeuvrer à distance un appareil de champ (201) au moyen d'un appareil de commande (208) par l'intermédiaire d'un bus de champ (206), **caractérisé en ce que** dans l'appareil de champ (201) est mémorisé un code de programme indépendant de la plate-forme, décrivant la fonctionnalité de cet appareil de champ, **en ce que** l'appareil de champ (201) comprend un processeur (205) élaborant le code de programme indépendant de la plate-forme, dans lequel le code de programme indépendant de la plate-forme est exécutable, et **en ce que** l'appareil de commande (208) est pourvu d'un environnement d'exécution (209) dans lequel le code de programme indépendant de la plate-forme est opérationnel après transmission de l'appareil de champ (201) à l'appareil de commande (208) par l'intermédiaire du bus de champ (206), de telle manière que la commande et/au la manoeuvre à distance de l'appareil de champ (201) soit réalisable sous l'environnement d'exécution (209) par l'intermédiaire de la transmission de paramètres de l'appareil de champ via le bus de champ (206).

2. Agencement selon la revendication 1, **caractérisé en ce que** les paramètres de l'appareil de champ sont des valeurs limites mesurées, des valeurs de consigne et des valeurs de champs de mesure.

3. Arrangement selon la revendication 1 ou 2, **caractérisé en ce que** le code de programme indépendant de la plate-forme est un code d'octets JAVA, **en ce que** le processeur est un processeur JAVA et **en ce que** l'environnement d'exécution est un environnement d'exécution JAVA.
